Europäisches Patentamt

European Patent Office

Office européen des brevets

(19)

(11) Numéro de publication : **0 467 768 A1**

(12) **DEMANDE DE BREVET EUROPEEN**

(21) Numéro de dépôt : **91401972.4**

(22) Date de dépôt : **15.07.91**

(51) Int. Cl.⁵ : **H04N 1/32**

(30) Priorité : **16.07.90 FR 9009056**

(43) Date de publication de la demande :
**22.01.92 Bulletin 92/04**

(84) Etats contractants désignés :
**BE DE FR GB NL**

(71) Demandeur : **IMECOM**
**11, avenue de la Gare**
**F-78181 Saint-Quentin-en-Yvelines (FR)**

(72) Inventeur : **Bruneau, Didier**
**28, rue des Carrières**
**F-78740 Evecquemont (FR)**
Inventeur : **Krieg, Stéphane**
**22 Villa Astrid**
**F-78960 Voisin le Bretonneux (FR)**

(74) Mandataire : **Arnaud, Jean Pierre Alfred**
**Cabinet Arnaud 94 rue Saint-Lazare**
**F-75009 Paris (FR)**

(54) **Installation et appareil de réception de télécopies.**

(57)    L'invention concerne une installation de réception de télécopies.
     Elle se rapporte à une installation dans laquelle des lignes téléphoniques (12) regroupées (en 14) dans un central téléphonique alimentent un appareil (16-18) qui mémorise (en 20) les informations des diverses télécopies reçues simultanément et/ou les transmet à une imprimante (22-24). De préférence, le contrôleur d'imprimante (22) est du type accélérateur permettant une impression à grande vitesse des télécopies.
     Application aux installations de télécopie à grand débit.

Fig 1

La présente invention concerne une installation permettant la réception simultanée d'informations par plusieurs lignes de transmission, et la présentation séquentielle de ces informations, ainsi qu'un appareil utilisé dans une telle installation.

L'installation et l'appareil selon l'invention peuvent être utilisés pour la gestion d'informations très diverses, essentiellement des informations présentées par pages, mais elle est particulièrement intéressante dans le cas des informations de télécopie. On décrit donc, dans la suite, l'invention en référence aux problèmes posés par la télécopie, mais il faut noter qu'elle s'applique aussi à d'autres informations, telles que les informations vidéotex, télétex, etc.

Comme les télécopieurs rencontrent un succès de plus en plus grand, il est fréquent que plusieurs expéditeurs de télécopies souhaitent se mettre en liaison avec un même destinataire. Si le destinataire n'a qu'un seul télécopieur, celui-ci indique qu'il est occupé au second demandeur. Etant donné cependant que les communications de télécopie prennent souvent un temps considérable lorsque les documents transmis ont de nombreuses pages, cette occupation de ligne est très gênante. Pour cette raison, certaines entreprises ont soit plusieurs télécopieurs connectés à plusieurs lignes séparées auxquelles des numéros d'appel séparés sont affectés, soit plusieurs télécopieurs reliés à plusieurs lignes qui, au niveau d'un central, sont regroupées afin qu'elles puissent être adressées par un même numéro.

L'utilisation d'un nombre de télécopieurs égal au nombre de lignes d'un groupement de lignes de communication est envisageable lorsque le nombre de lignes est égal à deux ou trois mais, dès qu'il doit être supérieur, le coût des télécopieurs devient important et la place qu'ils occupent est importante. En outre, tous ces télécopieurs séparés doivent être surveillés et nécessitent une main d'oeuvre non négligeable pour la surveillance des communications, le remplacement du papier, etc.

Il existe actuellement un certain nombre de "cartes de télécopie" qui peuvent être incorporées à des microordinateurs. Une carte de télécopie comporte un connecteur destiné à être relié à une ligne de communication, et elle est logée à l'un des emplacements prévus à cet effet dans un microordinateur. Dans le cas de certaines cartes, les informations reçues du télécopieur sont mémorisées sur une mémoire de masse, en général une mémoire à disque magnétique éventuellement après conversion du format. Les informations du disque peuvent ensuite être transmises à une imprimante qui en forme une copie sur papier.

Dans le cas de l'installation décrite dans le paragraphe précédent, le stockage temporaire des informations de télécopie sur une mémoire de masse est le plus souvent indispensable, car les cartes de télécopie fonctionnant à 9 600 bauds reçoivent une page en un temps de l'ordre de 30 s alors qu'une imprimante laser du type le plus courant, ayant un moteur d'imprimante prévu pour imprimer huit pages par minute, a le plus souvent un contrôleur qui ne permet l'impression que d'une page de télécopie par minute. En conséquence, une mémoire tampon est indispensable dans ce cas.

Des imprimantes, dont certaines possèdent des caractéristiques d'impression accélérée, sont l'objet des documents US-A-4 563 706 et 3 302 217, ainsi que des documents "Patent Abstracts of Japan" vol. 009-303 (M-434) et vol. 007-071 (M-202) (JP-A-60-141578 et JP-A-57-212084).

Le document US-A-4 645 873 décrit un système de télécommunications permettant l'exécution de transactions et comprenant plusieurs lignes téléphoniques connectées chacune à une base de données par l'intermédiaire de modems. Ce système ne concerne pas des communications qui nécessitent l'adaptation de protocoles, ni un système dans lequel des documents sont affichés à l'emplacement auquel sont connectées plusieurs lignes téléphoniques.

L'invention concerne la résolution du problème posé par la réception simultanée de télécopies ou autres informations par plusieurs lignes, avec un matériel relativement peu coûteux et occupant un espace réduit. Selon l'invention, plusieurs lignes qui ont été regroupées à un central de communication sont connectées à un appareil qui assure non seulement la gestion des protocoles de télécopie, mais aussi le traitement et la conservation au moins temporaire de certaines au moins des informations de télécopie.

Plus précisément, l'invention concerne une installation destinée à recevoir simultanément des informations par plusieurs lignes de transmission d'un réseau de communications comportant au moins un central de communications, et à présenter séquentiellement ces informations à un emplacement distant du central, l'installation comprenant à cet effet un dispositif de présentation disposé à l'emplacement distant du central ; selon l'invention, l'installation comprend

un dispositif de regroupement de lignes, disposé au central et destiné à affecter un numéro particulier d'accès à un groupe de lignes disposées entre le central et l'emplacement distant et à acheminer une communication adressée au numéro particulier vers une ligne libre du groupe auquel est affecté le numéro particulier d'accès,

une partie de réseau de communications comportant au moins les lignes du groupe,

un dispositif destiné à gérer au moins un protocole de communications et à être connecté à toutes les lignes du groupe à l'emplacement distant du central, et

un dispositif de traitement d'informations connecté au dispositif de gestion de protocole afin qu'il reçoive de celui-ci les informations reçues simultanément et destiné à conserver au moins temporairement certaines au moins des informations et à les transmettre au dispositif de présentation séquentielle d'informations.

Dans un mode de réalisation, le dispositif de présentation d'informations comporte un contrôleur d'imprimante et un moteur d'imprimante. Le contrôleur d'imprimante est de préférence un contrôleur accélérateur ayant un débit de pages au moins de l'ordre de grandeur de celui du moteur d'imprimante.

Dans un exemple d'installation, le contrôleur et le moteur d'imprimante sont placés dans un même boîtier et constituent une imprimante.

Il est parfois avantageux que le moteur d'imprimante comporte plusieurs dispositifs de réception de copies.

Dans le cas actuellement le plus courant, le réseau est le réseau téléphonique commuté. Il peut cependant s'agir d'un autre réseau.

L'invention concerne aussi un appareil de communications destiné à une installation de ce type et qui comprend, dans un boîtier unique,

plusieurs connecteurs d'entrée destinés à la connexion de lignes téléphoniques,

un dispositif destiné à gérer au moins un protocole de communications et à être relié à tous les connecteurs,

un dispositif de traitement d'informations connecté au dispositif de gestion de protocole et comportant une mémoire tampon destinée à conserver au moins temporairement certaines au moins des informations, et

une sortie unique d'informations.

De préférence, il comporte aussi, dans le boîtier unique, un contrôleur d'imprimante. Le contrôleur d'imprimante est très avantageusement du type accélérateur.

Dans un mode de réalisation, le dispositif de gestion de protocole comporte un seul dispositif capable de gérer simultanément des protocoles sur plusieurs lignes de transmission. Dans un autre mode de réalisation, le dispositif de gestion de protocole comporte plusieurs circuits séparés de gestion de protocole associés chacun à une ligne au plus du groupe de lignes.

Ainsi, un équipement selon l'invention ne comprend qu'un ou deux boîtiers occupant une place réduite et ayant un seul système d'alimentation en feuilles de papier, ce système pouvant cependant comprendre plusieurs bacs utilisés en alternance de manière que l'installation ne soit pas en panne de papier. Le nombre de lignes qui peuvent être regroupées peut être important. En outre, grâce en grand débit d'impression, les télécopies peuvent être imprimées rapidement.

D'autres caractéristiques et avantages de l'invention ressortiront mieux de la description qui va suivre, faite en référence au dessin annexé sur lequel :

la figure 1 est un diagramme synoptique d'une installation selon l'invention ; et

la figure 2 est un diagramme synoptique d'un appareil réalisé selon l'invention.

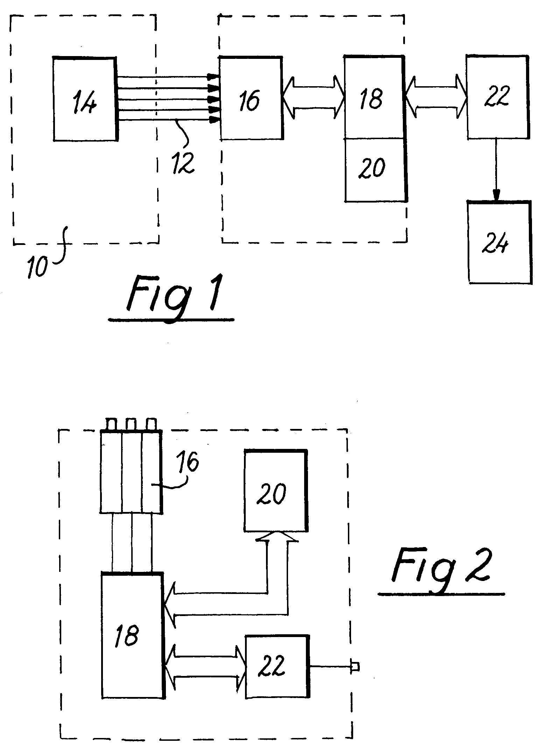

La figure 1 et un diagramme synoptique d'une installation réalisée selon l'invention. L'installation est raccordée à un central téléphonique 10 par plusieurs lignes de communication 12, qui ont subi un regroupement de lignes 14 dans le central 10. Il peut par exemple s'agir du réseau téléphonique commuté ordinaire, les lignes 12 étant des lignes téléphoniques ordinaires qui ont été regroupées au central 10 par l'Administration des Télécommunications.

Les lignes 12 arrivent à un circuit 16 qui assure les fonctions de réception de télécopie. Dans un mode de réalisation commode représenté sur la figure 2, le circuit 16 peut comporter plusieurs circuits montés en parallèle, d'un type connu pour la gestion d'une communication de télécopie. Dans une variante représentée sur la figure 1, un même circuit 16 peut assurer la gestion des protocoles nécessaires (protocole T30 par exemple) pour les diverses lignes.

Les données de télécopie sont transmises au circuit 18 de traitement de données qui commande la mémorisation des informations reçues dans une mémoire de masse 20 et/ou leur transmission à un contrôleur d'imprimante 22 qui commande lui-même un moteur d'imprimante 24.

Entre le format des informations de télécopie reçues dans le circuit 16 et l'impression par le moteur d'imprimante 24, les informations doivent subir certains traitements. L'invention envisage plusieurs possibilités.

Dans une première variante, les informations au format de télécopie, mais après suppression de tout ce qui concerne la gestion des protocoles, sont laissées sous cette forme pour être mémorisées dans la mémoire de masse 20. Ce n'est que lors de la lecture, par le circuit 18 des données, dans la mémoire de masse 20 que les informations sont transformées et mises sous un format que peut traiter le contrôleur d'imprimante 22.

Dans une autre variante, le circuit 16 assure une transformation des informations et les met à un format graphique, les données de la mémoire de masse 20 étant alors conservées sous ce format graphique. Dans une réalisation, c'est le circuit de traitement 18 qui transforme les données au format de télécopie provenant du circuit 16 en données à un format graphique qui peuvent être conservées dans la mémoire de masse 20 ou reçues directement par le contrôleur d'imprimante 22. Cette dernière possibilité est particulièrement intéressante.

Dans le mode de réalisation de la figure 1, les flèches larges indiquées entre les blocs 16 et 18 d'une part et 18 et 22 d'autre part représentent des échanges de données par des bus, le contrôleur 22 étant considéré de préférence comme incorporé à l'appareil, avec le circuit 18 de traitement, la mémoire de masse 20 et les circuits de réception de télécopie 16.

Dans une variante, le contrôleur d'imprimante et le moteur d'imprimante 24 peuvent constituer une imprimante normale, par exemple du type compatible "HP Laserjet II" ayant une capacité d'impression de huit pages par minute. Une telle imprimante ayant son contrôleur normal peut donc être connectée à un appareil selon l'invention qui comprend les circuits 16, 18 et 20 comme indiqué par le cadre en trait interrompu sur la figure 1. Cette disposition présente un certain nombre d'avantages, notamment de coût, mais elle présente aussi un inconvénient. En effet, les imprimantes du type précité, qui sont capables d'imprimer huit pages par minute lorsqu'elles reçoivent des données de caractères, ne sont plus capables que d'imprimer une page par minute environ lorsqu'elles impriment certains types de données, notamment de télécopie. Si le débit des lignes 12 est important, cette solution pose un problème lorsque les télécopies reçues doivent être traitées très rapidement. En effet, si trois télécopies de 20 pages chacune sont reçues simultanément à partir d'un même moment par trois lignes différentes, et si l'imprimante commence à imprimer dès qu'une première page a été reçue, il faut attendre 50 min après la fin des communications pour que les trois télécopies aient été complètement imprimées.

Selon une variante très avantageuse de l'invention, le contrôleur d'imprimante 22 n'est pas un simple contrôleur d'imprimante, mais est un contrôleur accélérateur ayant un débit de données particulièrement élevé. Un tel contrôleur, constituant un accélérateur d'imprimante, est par exemple le contrôleur "Imeprint" de la société IMECOM. Un tel accélérateur permet à un moteur d'imprimante 24 de travailler à sa vitesse nominale, c'est-à-dire huit pages par minute pour la plupart des modèles. Dans l'hypothèse précédente, dans le cas d'une imprimante à moteur capable d'imprimer huit pages par minute, les trois télécopies de l'exemple indiqué dans le paragraphe précédent sont disponibles 5 min après la fin de la réception des télécopies, alors qu'il fallait 50 min dans le cas précédent.

Un appareil particulièrement avantageux selon l'invention comprend donc un tel contrôleur d'imprimante appelé "contrôleur accélérateur" dans le présent mémoire et dans les revendications.

Dans un premier mode de réalisation, les circuits 16, 18, 20 et 22 sont regroupés dans un même boîtier, ayant des connecteurs d'entrée en nombre correspondant au nombre de lignes téléphoniques et un connecteur de sortie qui transmet un signal vidéo au moteur d'imprimante 24.

Dans un autre mode de réalisation, les circuits 16, 18 et 20 sont incorporés à un même boîtier, et le contrôleur 22 et le moteur 24 constituent une imprimante normale logée dans son propre boîtier.

Enfin, dans un mode de réalisation particulièrement avantageux, tous les éléments, c'est-à-dire le circuit 16, le circuit de traitement 18, la mémoire de masse 20, le contrôleur d'imprimante 22 et le moteur d'imprimante 24 sont logés dans un même boîtier, celui-ci ayant un volume un peu supérieur à celui d'une imprimante normale ou du même ordre de grandeur.

L'appareil selon l'invention constitue donc un "terminal de réception de télécopie". Cependant, on peut lui ajouter d'autres fonctions, notamment des fonctions d'émission de télécopies. Cependant, ces fonctions étant classiques, on ne les décrit pas en détail dans le présent mémoire. Il faut simplement noter que l'appareil doit disposer d'un lecteur, celui-ci étant par exemple un lecteur externe relié par un connecteur convenable.

On décrit maintenant un exemple de fonctionnement du système d'impression selon l'invention. Comme le circuit de traitement 18 commande l'alimentation du contrôleur 22, il sait si une impression est en cours. Si l'impression d'une télécopie est en cours, il poursuit cette impression jusqu'à ce qu'elle soit terminée. Si aucune impression n'est en cours, le circuit de traitement 18 détermine s'il existe des télécopies en attente, c'est-à-dire si des télécopies ont été reçues entièrement ou sont en cours de réception et n'ont pas encore commencé à être imprimées. Si la réponse est positive, le circuit 18 de traitement détermine si, parmi les télécopies qui n'ont pas encore été imprimées, il en existe dont la réception est terminée. Si effectivement il existe des télécopies dont la réception est terminée, il imprime d'abord la plus ancienne, jusqu'à ce que toutes les télécopies dont la réception est terminée aient été imprimées. Il détermine ensuite s'il reste des télécopies en cours de réception. Si des télécopies sont en cours de réception, alors que toutes les télécopies entièrement reçues ont été imprimées, il sélectionne la plus ancienne et commence à l'imprimer. A la fin de cette impression, il passe à l'impression de la télécopie en attente suivante, en déterminant si, entre-temps, des télécopies ont été reçues et terminées.

Bien entendu, la gestion de l'impression peut être réalisée différemment. En particulier, un tableau de commande incorporé à l'appareil peut permettre à un opérateur de donner la priorité à des télécopies correspondant à des expéditeurs particuliers, par exemple lorsqu'il attend une télécopie urgente. En outre, bien qu'on ait décrit un mode de réalisation dans lequel l'impression commencée d'une télécopie est poursuivie jusqu'à son terme et en conséquence dans lequel la vitesse d'impression est limitée par la vitesse de réception dans cette période particulière du fonctionnement, d'autres variantes sont possibles. Ainsi, le circuit 18 de traitement peut transmettre des pages de plusieurs télécopies différentes sous forme imbriquée et peut commander la réception des télécopies dans plusieurs plateaux récepteurs différents du moteur d'imprimante 24. On connaît déjà de telles imprimantes qui permettent un interclassement. Ce dernier mode de réalisation nécessite donc un système quelconque de réception multiple de documents en sortie, soit simplement à plateaux récepteurs, soit sous forme plus élaborée, avec un appareil d'interclassement ou de tri, de type bien connu dans la technique des photocopieurs. Dans une variante, un appareil unique peut commander plusieurs moteurs d'imprimante.

Bien entendu, l'ensemble d'impression constitué par le contrôleur et le moteur d'imprimante (soit séparés, soit incorporés à un même boîtier d'imprimante) n'est pas obligatoirement exclusivement affecté au seul appareil de réception de télécopies. En effet, selon des techniques bien connues, il peut être partagé avec un autre système, par exemple un ordinateur. Il est alors très avantageux que le moteur d'imprimante comporte plusieurs dispositifs récepteurs de copies (par exemple des simples plateaux récepteurs) ; l'un d'eux peut être affecté aux télécopies et un autre aux autres documents imprimés.

**Revendications**

1. Installation destinée à recevoir simultanément des informations par plusieurs lignes de transmission d'un réseau de communications comportant au moins un central de communications, et à présenter séquentiellement ces informations à un emplacement distant du central, l'installation comprenant à cet effet un dispositif de présentation disposé à l'emplacement distant du central, caractérisée en ce qu'elle comprend

un dispositif de regroupement de lignes, disposé au central et destiné à affecter un numéro particulier d'accès à un groupe de lignes disposées entre le central et l'emplacement distant et à acheminer une communication adressée au numéro particulier vers une ligne libre du groupe auquel est affecté le numéro particulier d'accès,

une partie de réseau de communications comportant au moins les lignes du groupe,

un dispositif destiné à gérer au moins un protocole de communications et à être connecté à toutes les lignes du groupe à l'emplacement distant du central, et

un dispositif de traitement d'informations connecté au dispositif de gestion de protocole afin qu'il reçoive de celui-ci les informations reçues simultanément et destiné à conserver au moins temporairement certaines au moins des informations et à les transmettre au dispositif de présentation séquentielle d'informations.

2. Installation selon la revendication 1, caractérisée en ce que le dispositif de présentation d'informations comporte un contrôleur d'imprimante et un moteur d'imprimante.

3. Installation selon la revendication 2, caractérisée en ce que le contrôleur d'imprimante est un contrôleur accélérateur ayant un débit de pages au moins de l'ordre de grandeur de celui du moteur d'imprimante.

4. Installation selon la revendication 2, caractérisée en ce que le contrôleur et le moteur d'imprimante sont placés dans un même boîtier et constituent une imprimante.

5. Installation selon l'une quelconque des revendications 2 à 4, caractérisée en ce que le moteur d'imprimante comporte plusieurs dispositifs de réception de copies.

6. Installation selon l'une quelconque des revendications précédentes, caractérisée en ce que le réseau est le réseau téléphonique commuté.

7. Appareil de communications pour la mise en oeuvre d'une installation selon la revendication 1, caractérisé en ce qu'il comprend, dans un boîtier unique,

plusieurs connecteurs d'entrée destinés à la connexion de lignes téléphoniques,

un dispositif destiné à gérer au moins un protocole de communications et à être relié à tous les connecteurs,

un dispositif de traitement d'informations connecté au dispositif de gestion de protocole et comportant une mémoire tampon destinée à conserver au moins temporairement certaines au moins des informations, et

une sortie unique d'informations.

8. Appareil selon la revendication 7, caractérisé en ce qu'il comporte aussi, dans le boîtier unique, un contrôleur d'imprimante.

9. Appareil selon la revendication 8, caractérisé en ce que le contrôleur d'imprimante est du type accélérateur.

10. Appareil selon l'une quelconque des revendications 7 à 9, caractérisé en ce que le dispositif de gestion de protocole comporte un seul dispositif capable de gérer simultanément des protocoles sur plusieurs lignes de transmission.

11. Appareil selon l'une quelconque des revendications 7 à 9, caractérisé en ce que le dispositif de gestion de protocole comporte plusieurs circuits séparés de gestion de protocole associés chacun à une ligne au plus du groupe de lignes.

_Fig 1_

_Fig 2_

EP 0 467 768 A1

Office européen
des brevets

**RAPPORT DE RECHERCHE EUROPEENNE**

Numero de la demande

EP 91 40 1972

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | US-A-4 645 873 (CHOMET)<br>* Abrégé; figures 1-6; colonne 1, lignes 23-49; colonne 2, lignes 6-53 *<br>--- | 1,2,4-8,10,11 | H 04 N 1/32 |
| D,Y | US-A-4 563 706 (NAGASHIMA)<br>* Abrégé; figures 1-5; colonne 1, ligne 52 - colonne 2, ligne 36 *<br>--- | 1,2,4-8,10,11 | |
| A | DE-A-3 302 217 (CANON K.K.)<br>* Abrégé; figures 1-15; page 1, lignes 14-19; page 14, ligne 29 - page 16, ligne 6; page 17, ligne 27 - page 19, ligne 25; page 29, lignes 14-31 *<br>--- | 1,2,7,8 | |
| D,A | PATENT ABSTRACTS OF JAPAN, vol. 9, no. 303 (M-434)[2026], 30 novembre 1985; & JP-A-60 141 578 (HITACHI SEISAKUSHO K.K.) 26-07-1985<br>* Abrégé; figure *<br>--- | 2,3,9 | |
| D,A | PATENT ABSTRACTS OF JAPAN, vol. 7, no. 71 (M-202)[1216], 24 mars 1983; & JP-A-57 212 084 (TOKYO SHIBAURA DENKI K.K.) 27-12-1982<br>* Abrégé; figure *<br>--- | 1-5,7-9 | DOMAINES TECHNIQUES RECHERCHES (Int. Cl.5)<br><br>H 04 N 1/00 |
| A | WO-A-8 501 852 (INTERNATIONAL TELDATA II CORP.)<br>* Abrégé; figures 1-5; page 7, lignes 5-17 *<br>----- | 1 | |

Le présent rapport a été établi pour toutes les revendications

| Lieu de la recherche | Date d'achèvement de la recherche | Examinateur |
|---|---|---|
| LA HAYE | 24-09-1991 | KASSOW H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8